# NEUE EUROPÄISCHE PATENTSCHRIFT

(11) **EP 2 588 292 B2**
(45) Veröffentlichungstag und Bekanntmachung des Hinweises auf die Entscheidung über den Einspruch: **10.03.2021**
(45) Hinweis auf die Patenterteilung: 20.09.2017
(21) Anmeldenummer: 11727467.0
(22) Anmeldetag: 27.06.2011
(51) Int. Cl.: B29C 45/76, B29C 45/28, B29C 45/27

(54) **EINSPRITZWERKZEUG FÜR DIE HERSTELLUNG VON BAUTEILEN IM SPRITZGUSSVERFAHREN**
INJECTION TOOL FOR PRODUCING COMPONENTS BY INJECTION MOULDING
OUTIL D'INJECTION POUR RÉALISER DES PIÈCES DANS LE CADRE D'UN PROCÉDÉ DE MOULAGE PAR INJECTION

(30) Priorität: 01.07.2010 AT 11182010
(43) Veröffentlichungstag der Anmeldung: 08.05.2013
(73) Patentinhaber: Hefner, Christian, 4652 Fischlham (AT)
(72) Erfinder: Hefner, Christian, 4652 Fischlham (AT)
(74) Vertreter: Babeluk, Michael
(86) Internationale Anmeldenummer: PCT/EP2011/060689
(87) Internationale Veröffentlichungsnummer: WO 2012/000924

(56) Entgegenhaltungen:
- EP-A1- 1 013 395
- EP-A1- 1 961 549
- CA-A1- 2 700 877
- CH-A5- 686 715
- JP-A- 2001 170 977

## Beschreibung

Die Erfindung betrifft ein Einspritzwerkzeug für die Herstellung von Bauteilen im Spritzgussverfahren, mit mehreren Kavitäten zur Formung jeweils eines Produkts, gemäß dem Oberbegriff von Patentanspruch 1.

Übliche Einspritzwerkzeuge für die Durchführung von Spritzgussverfahren besitzen eine Düsennadel, die in Axialrichtung verstellbar ist, um den Einspritzvorgang zu steuern. Übliche Nadelverschlusssystem werden pneumatisch, hydraulisch, mechanisch oder elektrisch angetrieben. Dabei ist die Nadel zwischen einer ersten Endstellung (offen) und einer zweiten Endstellung (geschlossen) bewegbar.

Um die Einspritzmenge und die Geschwindigkeit des Materialflusses zu steuern, ist es bekannt, die erste Endstellung einstellbar auszuführen, um den Öffnungsquerschnitt im Bereich der Nadelspitze gegebenenfalls verringern zu können. Auf diese Weise kann bei einem Einspritzwerkzeug mit einer Mehrzahl von Kavitäten eine gleichmäßige Produktqualität sichergestellt werden, da es aufgrund unvermeidlicher Temperaturunterschiede, Oberflächenbeschaffenheit, ungleicher Verteilerkanäle und dergleichen auch bei sorgfältiger Ausbildung des Einspritzwerkzeuges nicht vermieden werden kann, dass ungleiche Strömungsverhältnisse bei der Einströmung des Materials vorliegen. Durch die Einstellung der Öffnungsstellung der Düsennadel können diese Ungleichmäßigkeiten ausgeglichen werden, so dass die Qualität der hergestellten Endprodukte gesichert werden kann. Es ist bekannt, die Endstellung der Düsennadel mechanisch einzustellen, was aber nur bei einer Unterbrechung des Produktionsvorganges möglich ist. Der Einstellvorgang ist dementsprechend aufwändig und verursacht durch die Produktionsunterbrechungen eine Verringerung der Produktionskapazität. Darüber hinaus besteht stets die Gefahr der Produktion von Ausschuss nach einem Stillstand des Einspritzwerkzeuges.

Um diese Nachteile zu vermeiden, sind mechanische Systeme bekannt geworden, die eine Einstellung des Strömungsquerschnittes in einem Werkzeug mit mehreren Kavitäten ermöglichen. Aufgrund der Komplexität dieser Vorrichtungen sind diese auf Werkzeuge mit einer relativ geringen Anzahl von Kavitäten beschränkt, die überdies eine angepasste Anordnung (linear) aufweisen müssen, um den Anforderungen der Einstelleinrichtung Rechnung zu tragen.

Die AT 5 750 U offenbart eine Einspritzdüse, bei der eine mechanische Einstellbarkeit der Düsennadel gegeben ist. In dieser Druckschrift muss der Produktionsvorgang immer unterbrochen werden, um den Öffnungshub zu verstellen. Dabei ist die Düsennadel der Einspritzdüse als eine starre Verbindung zwischen dem Kolben der Düsennadel und der Anschlagschraube ausgestaltet.

Die DE 40 32 500 A1 beschreibt eine Spritzgießeinrichtung, bei der digital gesteuerte Anschlagkolben und der Aufnahmekolben der Einspritzdüse miteinander in Verbindung stehen. Diese Vorrichtung besitzt einen komplexen Aufbau und ist störanfällig.

Die EP 1 961 549 A1 offenbart eine Nadelbetätigungsvorrichtung, bei der unter anderem Ausgestaltungen des Kolbens, mit dem die Düsennadel verbunden ist, beschrieben wurden. Der Kolben, mit dem die Düsennadel verbunden ist, kann elektrisch antreibbar sein, was entsprechend aufwendig ist.

Die US 5,078,589 A offenbart eine Einspritzvorrichtung, bei der die Düsennadel mit einer Feststellschraube verbunden ist.

Aus der JP 2001-170977 A ist ein Spritzwerkzeug bekannt, bei denen der Nadelhub durch einen keilförmigen Anschlag verhindert werden kann. Die EP 1 013 395 A beschreibt eine Verstellvorrichtung im Zusammenhang mit einem Heißkanalwerkzeug.

Aufgrund des Aufbaus der bekannten Werkzeuge kann eine Einstellung des Nadelhubs nur in bestimmten Zeitabständen erfolgen. Die Aufrechterhaltung einer permanent hohen Qualität kann so nicht gewährleistet werden.

Aufgabe der vorliegenden Erfindung ist es, die oben angeführten Nachteile zu vermeiden und ein Einspritzwerkzeug zu schaffen, das eine präzise Einstellung von Einspritzmenge und Einspritzgeschwindigkeit ermöglicht, ohne eine Unterbrechung des Produktionsvorganges zu benötigen. Die Vorrichtung soll dabei einfach und kostengünstig sein und eine hohe Produktionsqualität permanent gewährleisten.

Erfindungsgemäß werden diese Aufgaben durch die Merkmale von Patentanspruch 1 gelöst. Ein wesentlicher Aspekt der Erfindung liegt darin, dass es nicht erforderlich ist, die Verstellbewegung der Düsennadel selbst elektrisch auszuführen, so dass beispielsweise ein einfacher und kostengünstiger pneumatischer Antrieb einsetzbar ist. Durch den Elektromotor, der für jede Düsennadel einzeln vorgesehen ist, wird lediglich ein Anschlag für die Düsennadel verstellt, so dass ein Elektromotor mit vergleichsweise geringer Leistung und geringem Drehmoment eingesetzt werden kann. Die erfindungsgemäße Vorrichtung ist daher einfach und kostengünstig herstellbar, gleichzeitig jedoch äußerst flexibel, da im Prinzip jede einzelne Kavität nach jedem einzelnen Schuss neu kalibriert werden kann. Durch die Verstellung des Anschlags mittels eines elektrischen Motors findet eine präzise Einstellung von Einspritzmenge und Einspritzgeschwindigkeit statt, ohne den Produktionsvorgang zu unterbrechen. In der vorliegenden Erfindung stellt die Düsennadel eine separate Einheit dar, die vom elektrisch verstellbaren Anschlag getrennt ist. Erfindungsgemäß ist der Elektromotor als Schrittmotor ausgebildet, d.h., dass durch eine Steuerungseinrichtung eine Sollposition für die Schraube vorgegeben werden kann, die die erste Endstellung der Düsennadel festlegt. Die gewünschte Position wird vom Schrittmotor präzise und mit hoher Wiederholgenauigkeit angefahren.

Das erfindungsgemäße Einspritzwerkzeug ist als Kaltkanalwerkzeug ausgebildet ist, d.h. für die Verarbeitung von Silikon und ähnlichen Werkstoffen eingesetzt zu werden. Dabei wird das gesamte Einspritzsystem bis hin zur Kavität in einem relativ engen Temperaturbereich gehalten, um einerseits die erforderliche Mindesttemperatur zu gewährleisten, die eine ausreichend niedrige Viskosität des Werkstoffes sicherstellt, und andererseits wird durch Begrenzung der Maximaltemperatur ein vorzeitiges Aushärten verhindert.

Durch das erfindungsgemäße Einspritzwerkzeug kann jeder Elektromotor einzeln und unabhängig angesteuert werden, wobei keine mechanische Verbindung zwischen den einzelnen Einspritzdüsen erforderlich ist. Die Anzahl und die Anordnung der Kavitäten unterliegt dabei durch das Verstellsystem für die Düsennadel keinerlei zusätzlicher Beschränkung und kann daher im Hinblick auf die herzustellenden Produkte innerhalb weiter Grenzen optimiert werden.

Ein besonderer Vorteil der erfindungsgemäßen Lösung liegt darin, dass es durch die Verstelleinrichtung auch möglich ist, die Einspritzdüse gänzlich zu verschließen. Damit kann eine Kavität auch unmittelbar während des Produktionsvorganges ausgeschaltet werden, wenn diese aufgrund irgendwelcher Probleme angezeigt ist.

Weiters betrifft die vorliegende Erfindung auch ein Verfahren zur Herstellung von Produkten im Spritzgussverfahren, gemäß den Merkmalen des Anspruchs 7. Erfindungsgemäß ist vorgesehen, dass die erste Einstellung individuell für jede Einspritzdüse elektromotorisch verstellt wird. Diese Verstellung kann insbesondere laufend während des Produktionsvorganges erfolgen, d.h. im Extremfall, dass für jeden Schuss ein eigener Verstellvorgang durchgeführt wird, wenn beispielsweise entsprechende Sensoranordnung vorgesehen sind, um Messergebnisse für jede Kavität zur Verfügung zu stellen, die für die Optimierung des Einspritzvorganges erforderlich sind. Dabei wird die Verstellung des Anschlages erfindungsgemäß in der Pause zwischen den einzelnen Einspritzvorgängen, also unmittelbar vor dem nächsten Einspritzvorgang, durchgeführt, wenn der Anschlag nicht belastet ist.

Die Einstellung eines Werkzeugs mit mehreren Kavitäten ist eine schwierige Aufgabe, die viel Erfahrung benötigt, da jede Einstellung an einer Kavität grundsätzlich auch die anderen Kavitäten beeinflusst. Es muss daher am Beginn eines Produktionsvorgangs mit einer Anlaufphase gerechnet werden, in der erhöhter Ausschuss auftritt. Es kann aber während der Produktion zu Veränderungen und Prozessschwankungen kommen, die sich auf die Füllung der einzelnen Kavitäten auswirken und die daher eine Nachstellung der Düsen erforderlich machen.

Um diese Schwierigkeiten zu vermindern sieht die Ausführung der Erfindung eine Messeinrichtung zur Erfassung der Produktionsqualität vor, die mit einer Regelungseinrichtung verbunden ist, die die Elektromotoren ansteuert.

Auf diese Weise kann nach jedem Schuss eine Einstellvorgang anhand eines optimierten Algorithmus nachgestellt werden, so dass nicht nur eine optimale Einstellung rasch und ohne spezialisiertes Personal aufgefunden werden kann, sondern auch gleichbleibende Qualität langfristig gewährleistet werden kann.

Die Messeinrichtung erfasst sowohl Unterfüllung als auch Überspritzung. Unterfüllung macht sich bemerkbar durch verringertes Teilegewicht, ein verkleinertes Maß, Fließstellen, Kerben, nicht ausgeprägte Oberflächen oder einen nicht gefüllten Übertritt. Überspritzung äußert sich durch Gratbildung, erhöhtes Teilegewicht, ein vergrößertes Maß und dgl.

Die obigen Mängel können bevorzugt durch eine Kamera erfasst werden, die die hergestellten Bauteile optisch untersucht und bewertet. Es ist aber auch möglich, einfach durch Wiegen der Bauteile auf die Füllung zu schließen.

Die Regelung erfolgt bevorzugt automatisch, kann aber auch halbautomatisch ausgeführt sein, d.h., dass eine Bedienungsperson Eingriffe vornehmen kann. Es ist aber auch möglich, einen manuellen Betriebsmodus vorzusehen.

In der Folge wird die vorliegende Erfindung anhand des in der Figur dargestellten Ausführungsbeispiels näher erläutert.
- Fig. 1: zeigt schematisch ein erfindungsgemäßes Einspritzwerkzeug; und
- Fig. 2: zeigt ein Detail von Fig. 1.

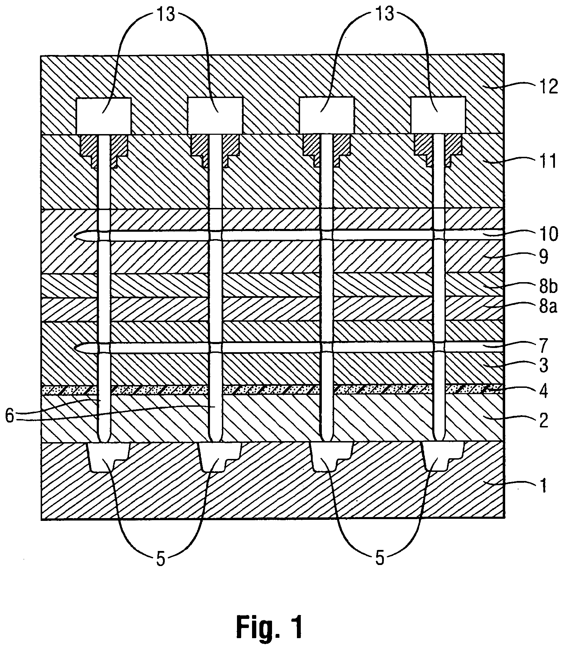

Das Einspritzwerkzeug von Fig. 1 besteht aus mehreren Formplatten 1, 2, 3 mit einer Wärmeisolierschicht 4 zwischen den Platten 2 und 3. In der Formplatte 1 sind mehrere Kavitäten 5 ausgebildet, in denen nicht dargestellte Werkstücke durch einen Spritzgießvorgang hergestellt werden. In den Formplatten 2 und 3 sind Einspritzdüsen 6 eingesetzt, die über einen Zufuhrkanal 7 mit dem Kunststoff versorgt werden, der das Rohmaterial darstellt. An die dritte Formplatte 3 schließen weitere Werkzeugplatten 8a, 8b, 9 an, in denen ein Pneumatickanal 10 ausgebildet ist, der zur Versorgung der Einspritzdüsen 6 mit Druckluft vorgesehen ist. In einer weiteren Platte 11 ist ein Antrieb für einen hier nicht darstellten Anschlag der Düsennadel 14 vorgesehen und in einer Abschlussplatte 12 sind mehrere Elektromotoren 13 angeordnet.

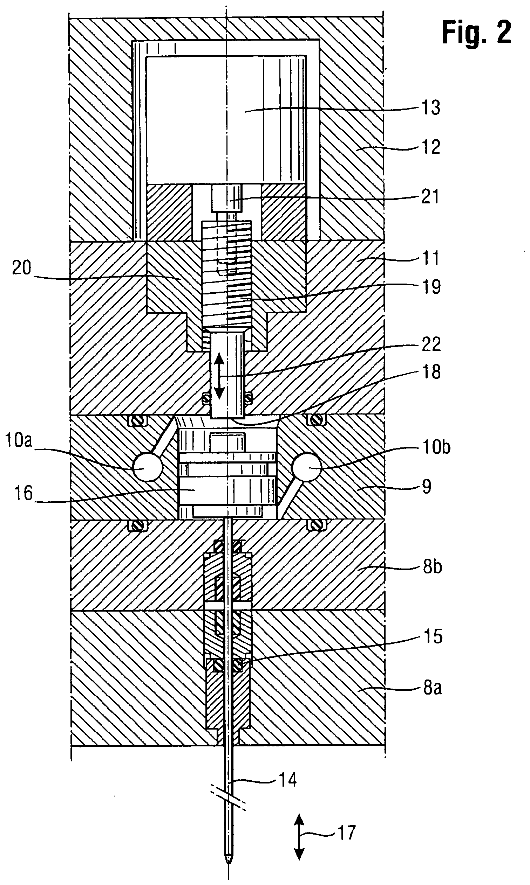

In Fig. 2 ist eine Verstellvorrichtung für den Anschlag der Düsennadel 14 im Detail dargestellt. Die Düsennadel 14 dient in bekannter Weise zum Verschließen einer Düsenöffnung, um Beginn und Ende des Einspritzvorganges genau definiert zu ermöglichen. Dichtungen 15 dienen dazu, ein Aufsteigen des Materials beim Spritzgießvorgang über die Platten 8a, 8b hinaus zu verhindern. Ein Kolben 16 dient zur Betätigung der Düsennadel 14. Dazu wird über Kanäle 10a, 10b Druckluft zugeführt, um die Düsennadel 14 in Richtung des Doppelpfeils 17 zu bewegen. An der Oberseite des Kolbens 16 ist ein verstellbarer Anschlag 18 vorgesehen, der an einer Schraubspindel 19 befestigt ist, die in einem Einsatz 20 der Platte 11 gehalten ist. Ein Wellenstummel 21 des Motors 13 greift in die Schraubspindel 19 ein und verdreht diese so, dass sich der Anschlag 18 in Axialrichtung (Doppelpfeil 22) bewegt.

Auf diese Weise ist es möglich, eine Feineinstellung des Materialflusses für jede einzelne Kavität während des Produktionsprozesses durchzuführen.

## Patentansprüche

1. Einspritzwerkzeug für die Herstellung von Bauteilen im Spritzgussverfahren, das als Kaltkanalwerkzeug ausgebildet ist, mit mehreren Kavitäten (5) zur Formung jeweils eines Produkts, mit einer Einspritzdüse (6) zum Einspritzen von Kunststoffen für jede Kavität (5), wobei eine Einspritzdüse (6) einen Einspritzkanal aufweist, der durch eine Düsennadel (14) verschließbar ist, um den Einspritzvorgang zu steuern, und wobei eine Betätigungseinrichtung vorgesehen ist, die dazu ausgebildet ist, die Düsennadel (14) zwischen einer ersten Endstellung und einer zweiten Endstellung in Axialrichtung zu bewegen, wobei ein verstellbarer Anschlag (18) vorgesehen ist, der die erste Endstellung festlegt, **dadurch gekennzeichnet, dass** der verstellbare Anschlag (18) als Schraube ausgebildet ist, die koaxial zur Düsennadel (14) ausgebildet ist und durch einen als Schrittmotor ausgebildeten Elektromotor (13) verstellbar ist und dass eine Messeinrichtung zur Erfassung der Produktionsqualität vorgesehen ist, die mit einer Regelungseinrichtung verbunden ist, die die Elektromotoren (13) ansteuert.

2. Einspritzwerkzeug nach Anspruch 1, **dadurch gekennzeichnet, dass** die Betätigungseinrichtung pneumatisch ausgeführt ist.

3. Einspritzwerkzeug nach einem der Ansprüche 1 oder 2, **dadurch gekennzeichnet, dass** eine Steuerungseinrichtung vorgesehen ist, die den Elektromotor (13) jeder Einspritzdüse (6) unabhängig steuert.

4. Einspritzwerkzeug nach einem der Ansprüche 1 bis 3, **dadurch gekennzeichnet, dass** die erste Endstellung bis zu einer Schließstellung für die Einspritzdüse (6) verstellbar ist.

5. Einspritzvorrichtung nach einem der Ansprüche 1 bis 4, **dadurch gekennzeichnet, dass** die Messeinrichtung die Produktionsqualität optisch erfasst.

6. Einspritzvorrichtung nach einem der Ansprüche 1 bis 4, **dadurch gekennzeichnet, dass** die Messeinrichtung als Waage ausgebildet ist.

7. Verfahren zur Herstellung von Produkten im Kaltkanal-Spritzgussverfahren, bei dem Kunststoff gleichzeitig in mehrere Kavitäten (5) eines Einspritzwerkzeugs eingespritzt wird, wobei der Kunststoff in jede Kavität (5) über eine Einspritzdüse (6) eingebracht wird, die durch eine Düsennadel (14) verschließbar ist, um das Einspritzende festzulegen, und wobei die Einspritzmenge und -geschwindigkeit durch eine Verstellung einer durch einen verstellbaren Anschlag festgelegten ersten Endstellung der Düsennadel (14) festgelegt wird, **dadurch gekennzeichnet, dass** der verstellbare Anschlag (18) als Schraube ausgebildet ist, die koaxial zur Düsennadel (14) ausgebildet ist und die erste Endstellung individuell für jede Einspritzdüse (6) elektromotorisch durch einen Schrittmotor verstellt wird und dass die Verstellung der ersten Endstellungen der Düsennadeln (14) unmittelbar vor dem Einspritzvorgang durchgeführt wird und dass die Ansteuerung der Elektromotoren (13) durch eine Regelungseinrichtung erfolgt, die mit einer Messeinrichtung zur Erfassung der Produktionsqualität verbunden ist.

8. Verfahren nach Anspruch 7, **dadurch gekennzeichnet, dass** die Produktionsqualität laufend überwacht wird und die erste Endstellung individuell für jede Einspritzdüse (6) automatisch nachgeregelt wird.

## Claims

1. An injection tool for the production of components by an injection-molding method, which is designed as a cold-runner mold, having several cavities (5) for shaping one respective product, having an injection nozzle (6) for injecting plastic materials for each cavity (5), wherein an injection nozzle (6) has an injection channel which can be closed by a nozzle needle (14) in order to control the injection operation, and wherein an actuating device is provided, said actuating device being designed to move the nozzle needle (14) in an axial direction between a first end position and a second end position, wherein an adjustable stop (18) is provided which defines the first end position, **characterised in that** the adjustable stop (18) is designed as a screw which is designed coaxially in relation to the nozzle needle (14) and is adjustable by an electric motor (13) formed as a stepper motor, and **in that** a measuring device is provided for detecting the production quality, said measuring device being connected to a feedback control device which triggers the electric motors (13).

2. An injection tool according to claim 1, **characterised in that** the actuating device is arranged pneumatically.

3. An injection tool according to one of the claims 1 or 2, **characterised in that** a control device is provided which controls the electric motor (13) of each injection nozzle (6) independently.

4. An injection tool according to one of the claims 1 to 3, **characterised in that** the first end position is adjustable up to a closing position for the injection nozzle (6).

5. An injection apparatus according to one of the claims 1 to 4, **characterised in that** the measuring device visually detects the production quality.

6. An injection apparatus according to one of the claims 1 to 4, **characterised in that** the measuring device is arranged as a balance.

7. A method for producing products by a cold-runner injection-molding method in which the plastic material is injected simultaneously into several cavities (5) of an injection tool, wherein the plastic is introduced into each cavity (5) via an injection nozzle (6) which can be closed by a nozzle needle (14) in order to define the injection end, and wherein the injection quantity and speed are determined by an adjustment of a first end position of the nozzle needle (14) determined by an adjustable stop, **characterised in that** the adjustable stop (18) is designed as a screw which is formed coaxially to the nozzle needle (14) and the first end position is adjusted individually for each injection nozzle (6) electromotively by a stepper motor, and **in that** the adjustment of the first end positions of the nozzle needles (14) is performed directly before the injection process, and **in that** the triggering of the electric motors (13) is carried out by a feedback control device which is connected to a measuring device for detecting the production quality.

8. A method according to claim 7, **characterised in that** the production quality is monitored continually and the first end position will individually be readjusted automatically for each injection nozzle (6).

## Revendications

1. Outil d'injection pour réaliser des pièces par injection, cet outil étant un outil à canal froid comportant plusieurs cavités (5) pour former respectivement un produit, une buse d'injection (6) pour injecter des matières plastiques dans chaque cavité (5),
- une buse d'injection (6) ayant un canal d'injection qui se ferme par une aiguille buse (14) pour commander l'opération d'injection, et
- une installation d'actionnement pour déplacer l'aiguille de buse (14) entre une première position de fin de course et une seconde position de fin de course dans la direction axiale, une butée réglable (18) étant prévue qui fixe la première position de fin de course,
outil d'injection **caractérisé en ce que**
la butée réglable (18) est sous la forme d'une vis coaxiale à l'aiguille de buse (14) et actionnée par un moteur électrique (13) en forme de moteur pas à pas, et
une installation de mesure pour saisir la qualité de la production, cette installation étant reliée à une installation de régulation commandant les moteurs électriques (13).

2. Outil d'injection selon la revendication 1,
**caractérisé en ce que**
l'installation d'actionnement est pneumatique.

3. Outil d'injection selon l'une des revendications 1 ou 2,
**caractérisé en ce que**
l'installation de commande assure la commande indépendante du moteur électrique (13) de chaque buse d'injection (6).

4. Outil d'injection selon l'une des revendications 1 à 3,
**caractérisé en ce que**
la première position de fin de course est réglable jusqu'à la position de fermeture de la buse d'injection (6).

5. Outil d'injection selon l'une des revendications 1 à 4,
**caractérisé en ce que**
l'installation de mesure saisit optiquement la qualité de la production.

6. Outil d'injection selon l'une des revendications 1 à 4,
**caractérisé en ce que**
l'installation de mesure est sous la forme d'une balance.

7. Procédé de fabrication de produit par un procédé d'injection à canal froid selon lequel la matière plastique est injectée simultanément dans plusieurs cavités (5) d'un outil d'injection,
- la matière plastique est introduite dans chaque cavité (5) par une buse d'injection (6) qui se ferme avec une aiguille (14) pour fixer la fin de l'injection, et
- la quantité à injecter et la vitesse d'injection étant fixées par le réglage d'une première position de fin de course de l'aiguille d'injection (14), fixée par une butée réglable,
procédé **caractérisé en ce que**
la butée réglable (18) est sous la forme d'une vis coaxiale à l'aiguille de buse (14) et la première position de fin de course se règle individuellement pour chaque buse d'injection (6) par un moteur électrique, par un moteur pas à pas et le réglage de la première position de fin de course des aiguilles de buse (14) se fait directement avant l'opération d'injection, et
la commande des moteurs électriques (13) est assurée par une installation de régulation reliée à une installation de mesure saisissant la qualité de la production.

8. Procédé selon la revendication 7,
**caractérisé en ce qu'**
on surveille en continu la qualité de la production et on règle automatiquement la première position de fin de course individuellement pour chaque buse d'injection.
